**Europäisches Patentamt**

**European Patent Office**

**Office européen des brevets**

(19)

(11) **EP 1 467 192 A1**

## (12) EUROPEAN PATENT APPLICATION

(43) Date of publication:
**13.10.2004 Bulletin 2004/42**

(51) Int Cl.$^7$: **G01L 3/12**

(21) Application number: **03100993.9**

(22) Date of filing: **11.04.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | • **Peel, Philip**<br>  **5075, Hornussen (CH)**<br>• **Huster, Josef**<br>  **5210, Windisch (CH)**<br>• **Dogwiler, Jörg**<br>  **8049, Zürich (CH)** |
| (71) Applicant: **ALSTOM Technology Ltd**<br>**5400 Baden (CH)** | • **Zesch, Wolfgang, Dr.**<br>  **8047, Zürich (CH)**<br>• **Fischer, Paul**<br>  **8962, Bergdietikon (CH)** |
| (72) Inventors:<br> • **Sell, Michael**<br>  **8053, Zürich (CH)**<br> • **Walker, Peter John**<br>  **5608, Stetten (CH)** | • **Sieber, Stefan**<br>  **8952, Schlieren (CH)** |

### (54) Torque measurement on rotating shaft

(57)    An apparatus for the measurement of the torque of a rotating component (12) comprises two plane, reflective surfaces (10,11) arranged axially spaced apart on the circumferential surface of the component (12), and a beam splitter that directs a light beam to each of the reflective surfaces (10,11). The light beams reflected by the surfaces (10,11) on the component (12) are detected by a single sensing area of an optical receiver (5) that is connected to a computer (21). A computer (21) determines a time delay between the signals reflected by the two surfaces (10,11) and calculates the torque corresponding to the time delay. The apparatus yields a high accuracy measurement that is insensitive to translational shifts of the component such as vibrations. The accuracy of the measurement is increased by a rotational offset between the two reflective surfaces (10, 11).

Fig. 1

EP 1 467 192 A1

## Description

Technical Field

This invention pertains to a device intended for the measurement of the torque of a rotating component, for example of a turbine shaft.

Background Art

Such a device is disclosed for example in GB 2 093 991. It includes two series of alternating reflective and non-reflective areas arranged about the circumference of a rotating component. The two series are spaced apart by a distance along the component's axis and are subject to relative rotational displacement due to the torque transmitted by the rotating component. Light from a single source is transmitted by means of two optical fibers to each of the series of reflective and non-reflective areas. A train of light pulses reflected back from each series of reflective areas is each received by same fibers and transmitted to an optical detection device having a separate receiver for each train of light pulses. An electrical wave form based on each of the two trains of light pulses is gained from the detection device. The torque transmitted by the rotating component is then determined by comparison of the two wave forms and evaluation of their phase relationship.

GB 2 093 992 also discloses a measurement device for determining the torque of a rotary component. It comprises two systems, a triggering system and a measurement system. The triggering system, which comprises a secondary light source, optical fibers, and a reflecting surface placed on the rotating component, triggers a primary light source to direct a light pulse, at each revolution of the component, at a reflective surface that is attached to the circumferential surface of the component. The reflective surface is plane or curved. The light pulse is deflected by the reflective surface in a direction according to the transmitted torque and received by a photo-diode matrix. The torque is determined using the geometrical impingement point of the deflected light pulse on the photo-diode matrix together with a calibration technique.

DE 19848068 discloses a further device for torque measurement comprising two concave, reflective surfaces placed on the circumferential surface of a rotor and axially spaced apart, and two separate light sources directed at the concave surfaces. The deflection of the light by the concave surfaces, which is indicative of the torque, is measured for example by means of a photo-diode array. The concave shape of the reflective surfaces is essential to the measurement as a plane mirror would not result in a deflection of the light indicative of the torque.

The described systems provide a certain level of measurement accuracy. However, a direct and high accuracy torque measurement is required in order to improve machine diagnositics which in turn contribute to the optimisation of machine performance and operating costs.

Summary of Invention

It is an object of this invention to provide an apparatus for the purpose of measurement of the torque of a rotating component that provides a high degree of measurement accuracy. It is a further object of the invention to provide an apparatus of this type that is simple and compact and as such facilitates portability and efficient installation. It is a yet further object of the invention to provide a method for a torque measurement that is insensitive to vibrations and temperature fluctuations of the rotating component.

An apparatus for the measurement of the torque of a component rotating about an axis comprises two reflective surfaces that are arranged on the circumferential surface of the rotating component and spaced apart such that there is an axial distance between them, furthermore a light source and means to direct light emitted by the light source onto both of the two reflective surfaces and, upon reflection off the surfaces, fall onto an optical receiver including electronic means for the conversion of optical signals into electrical signals. According to the invention, the reflective surfaces are plane, and the optical detector comprises one single optical detecting area, which is arranged to receive the light from both of the plane, reflective surfaces. The apparatus furthermore comprises electronic means for the processing of signals received by the optical receiver.

A method to measure the torque of a rotating component by means of an apparatus as described above determines, according to the invention, a time delay between signals reflected by the reflective surfaces and received by the optical receiver. In a particular method, the time delay is determined by means of a correlation of the two signals received at each revolution of the component.

During rotation of the component the light emitted by the single light source falls either onto the non-reflecting or diffuse surface of the rotating component or onto the plane reflecting surfaces as they pass in rotation. The light beams are reflected only within a limited time range thus creating a light pulse at each revolution of the component. Pulsing or triggering of the light source is therefore not necessary. The length and frequency of the light pulses received by the optical receiver are according to the size of the reflective surfaces and the speed of rotation of the component respectively. The torque transmitted by the rotating component causes a relative torsional twist of the two plane reflecting surfaces, such that during rotation one reflecting surface will lag the other reflecting surface. Accordingly, the light beams reflect off the plane surfaces and fall onto the sensitive area of the optical receiver with a time delay, which corresponds to the torque to be measured.

The two light pulses received by the single optical sensing area are converted and amplified by electronic means to form two electrical pulse-shaped signals, which are then electronically processed in order to determine the torque corresponding to the time delay between the pulses. For this, an electronic device such as a computer or micro-computer performs, for each revolution of the component, a correlation of the two electrical pulses and determines the time delay between two selected points on the pulses. The torque is then determined based on this time delay.

A high accuracy measurement of the torque is possible using this apparatus due to the reflecting surfaces being plane. They enable an insensitivity of the measurement to any translational movements such as vibrations and thermally induced shifts of the rotating component. In the case of translational movement of the reflective surfaces, the light is still reflected by the plane surfaces in the same direction (as long as the surface is sufficiently large).
An insensitivity of the torque measurement to translational movement of the rotating component is furthermore provided in that the measurement method is based on a time delay measurement between two light pulses as opposed to on a measurement of the position of light impinging on an optical detector array or the like. The high accuracy of the measurement is furthermore enhanced in that the torque measurement, again based on a time delay measurement, is insensitive to small misalignments of the light source with respect to the plane reflective surfaces.

The apparatus comprises essentially two basic entities, which are aligned with respect to one another. The first entity comprises the single light source, the optical receiver with one single optical detecting area, and the means to direct the light to the plane, reflective surfaces and back to the receiver. The second entity comprises the two reflective surfaces on the rotating component. An installation of the apparatus involves only the one alignment of the first entity with respect to the second. No alignments of any further components, such as fibers or triggering mechanisms, are necessary.

The first entity contains a relatively small number of components. In comparison, an apparatus of the described state of the art comprises either two sources or two optical detecting areas. This allows not only a simple assembly of the entity with a correspondingly small amount of necessary alignment of its components. It also facilitates a compact entity that is easily transported and installed with a minimum effort.

The measurement accuracy achieved by the apparatus according to the invention increases with decreasing time delay between the two pulses. This is facilitated by a negative rotational offset between the two reflecting surfaces on the rotating component. A negative offset means that the offset is in the direction opposite to the direction of the rotation of the component, which results in that the torsional twist during rotation is partially compensated by the offset. Thereby the relative rotational distance between the reflecting surfaces is decreased and the time delay is minimised.

A further increase in measurement accuracy is achieved by normal alignment of the reflecting surfaces in relation to the rotational axis of the component and by alignment of the light beams such that the incident light beams fall normally onto the reflecting surfaces.

Based on its measurement concept, the apparatus is self-triggering by the passage of the reflective surfaces at each revolution so that no separate triggering or timing devices are necessary.

The measurement apparatus according to the invention is suitably applied to the measurement of the torque of a turbine shaft. Vibrations and thermally induced shifts of a turbine shaft as well as thermally induced changes of the shaft stiffness do not affect the accuracy of a torque measurement performed with this apparatus.

In a particular embodiment of the invention the apparatus includes a temperature sensor that determines the temperature of the rotating component and inputs the temperature information to the electronic means that determines the torque. The temperature information enables the consideration of thermal changes of the stiffness of the rotating component and thus contributes to the accuracy of the measurement indpendent of the temperature of the component.

In a further particular embodiment of the invention the apparatus includes an angle sensor, which is connected to the electronic means for the calculation of the torque and is used for the measurement of the torsional twist at a given speed allowing calibration of the torque measurement device. The rotation of the component at the given speed is enabled by means of an auxiliary motor or pump or alternatively by manual means.

Brief Description of the Drawings

        Figure 1 shows a schematic of a first embodiment of the measurement apparatus according to the invention.
        Figure 2 shows a variant of the embodiment of figure 1.
        Figure 3 shows an example of typical electrical signals produced by the apparatus according to the invention.

Best Modes for Carrying out the Invention

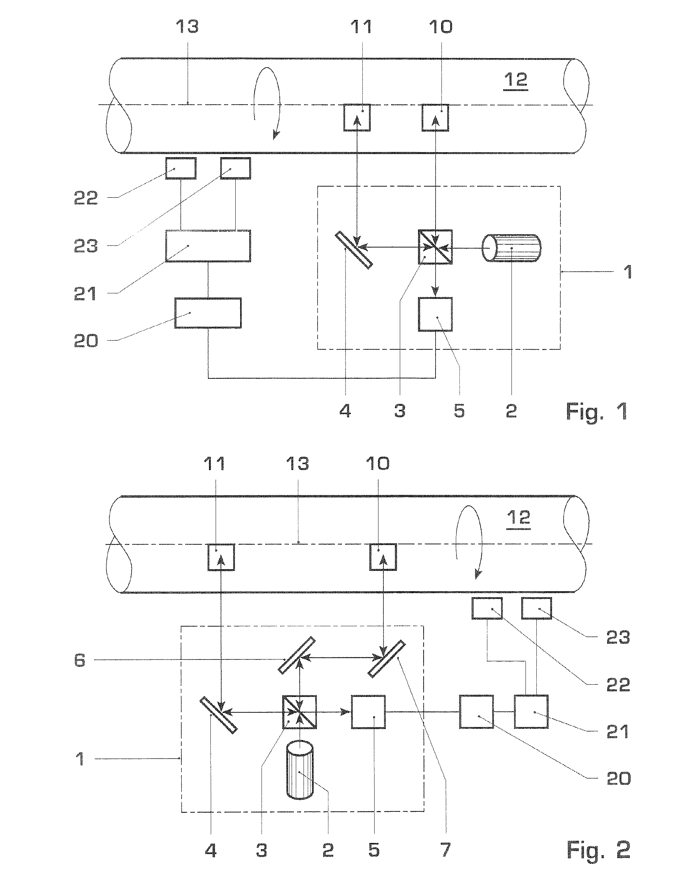

A first embodiment of the apparatus as shown in figure 1, comprises a first entity 1 including a single light source 2, a cube beam splitter 3, a turning mirror 4, and an optical receiver 5. This entity 1 is positioned with respect to a second entity comprising two plane reflecting surfaces 10 and 11 mounted on a component 12 that rotates about an axis 13 at a revolution speed $\omega$.

The light source 2, preferably a gas or semi-conductor laser, or alternatively one or more light emitting diode, directs a light beam onto a beam splitter such as the cube beam splitter 3, which divides the light beam such that one beam is deflected onto the first plane reflecting surface 10 and a second beam is directed at the turning mirror 4, which deflects it onto the second plane reflecting surface 11. Inplace of a turning mirror also a prism may be used. The plane surfaces 10 and 11 reflect the incident beams such that they are recombined by the cube beam splitter 3 and both fall onto the optical receiver 5. Preferably, the two entities are aligned such that the two light beams fall at normal incidence onto the plane, reflecting surfaces 10 and 11 and that they are reflected such that they return to the same spot in the beam splitter where the initial beam was split.

The alignment for normal incidence of the light beams has the advantage that the measurement system becomes insensitive to vibrations and static misalignment in all three orthogonal directions and to vibrations in two of three rotational directions. This insensitivity enables a more simplified installation of the measurement system and increases its portability. Normal incidence in this case means essentially normal incidence, for example normal incidence +/- 1 °such that the measurement sensitivity to misalignment, manufacturing tolerances, and temperature dependent variations is minimised as much as possible.

A tilt misalignment of first and second entities does however not affect the measurement accuracy.

The optical receiver 5 contains one single optical detecting area, for example a standard photodiode. Preferably, it has the approximate size of the light beams reflected by the reflective surfaces, which improves the measurement accuracy.

The optical receiver 5 further comprises a standard means to convert the optical signals into electrical signals and to amplify them. The amplified signals are then transmitted to an analog-to-digital converter 20. The resulting digital signals are input to an electronic computing means for signal processing, such as a computer 21 or a pre-programmed (dedicated) microchip, which determines the time delay between the two signals. For example, it performs a correlation between the two signals at each revolution of the component 12 in order to determine the time delay. Alternative methods for the determination of the time delay include peak detection, thresholding, and least squares matching.

Based on the result of the correlation, the torque of the rotating component 12 is then calculated as a function of this time delay, the stiffness of the rotating component, and the speed of its revolution ω.

In order to continuously provide a high accuracy value of the stiffness of the rotating component during the entire time of its rotation, a temperature sensor 22 is arranged to measure the temperature of the rotating component and is connected to the computer 21. The temperature values gained from the sensor 22 are continuously input to the signal processor 21, which determines the corresponding values of the component's stiffness. The stiffness is determined by using a prior material calibration and correcting for temperature effects by measurement of the temperature of the rotating component.

For the purposes of calibration, the plane surfaces 10 and 11 are mounted with a slight rotational shift relative to each other. This provides two time delayed pulse signals also in the event that the component is rotating at a slow rate.

For this, the component is rotated using a separate motor, at a speed different from the normal operating speed of the component, where the torque is to be measured. The light beams reflected off the two rotationally offset reflecting surfaces provide a pair of signal pulses necessary for an offset calibration value $\Delta T_0$, which is included in the torque calculation. The apparatus further includes an angle sensor 23, which is connected to the computer 21 and yields calibration parameters necessary to relate angle values to the signal values of the optical receivers. A calibration of the measurement device is possible by rotating the component by manual or preferably motor means at a given speed provided the torsion stiffness is known.

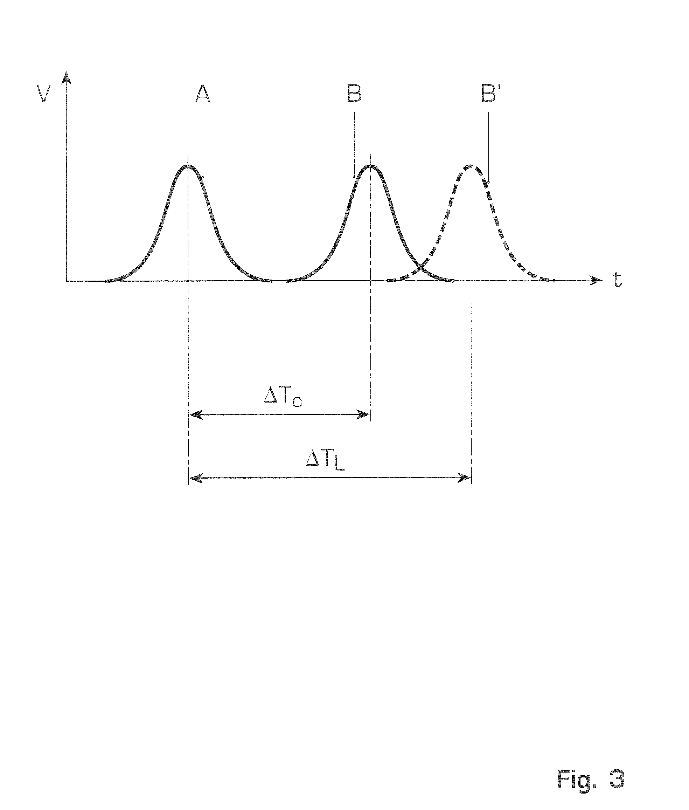

Figure 3 shows two sets of pulse signals each separated by a time delay, $\Delta T_0$ and $\Delta T_L$. The $\Delta T_0$ corresponds to the time delay between the two pulses A and B, shown in solid lines, reflected by the plane surfaces 10 and 11 respectively in the case of selected slow rotational speed for the purpose of calibration of the apparatus. $\Delta T_L$ corresponds to the time delay between two pulses A and B', shown in solid and broken lines, reflected by the two surfaces during regular operation of the component, such as the rotation of a turbine shaft at a nominal speed. The torque is determined using the difference between the two time delays. Explicitly, the torque τ is determined by the equation

$$\tau = k \cdot (\Delta T_L - \Delta T_0)/\omega,$$

where k is the stiffness of the component and ω is the component's speed of revolution.

The reflecting surfaces 10 and 11 are necessarily plane and preferably have a high degree of flatness. In case of a translational movement of the rotating component together with the reflective surfaces due to vibration or a thermally induced shift of the component, the light beams will hit the reflecting surfaces at a different point compared to without the translational shift. A high degree of flatness ensures that the light beams retain their original light path regardless of such translational shifts.

The beam splitter 3 is preferably arranged such that the incident light beam is divided into two transmitted or reflected light beams of equal intensity and approximately same beam shape. This is done by an appropriate choice of beam splitter type as well as appropriate choice of orientation with respect to the incident beam. This contributes to the measurement accuracy.

Figure 2 shows an alternative embodiment of the torque measurement apparatus. The first entity 1 comprises in comparison to that of figure 1 two additional turning mirrors 6 and 7 arranged in the light path leading to one of the plane reflecting surfaces. The path lengths leading to the two reflecting surfaces are equal. This measure reduces the sensitivity of the apparatus to misalignment of the components within the first entity as well as drifts in the pointing stability of the light source.

In a further variant of the apparatus, optical fibers are provided instead of turning mirrors to transmit the light emitted by the single source to both of the reflective surfaces and the optical receiver.

The apparatus according to this invention is applied to the measurement of the torque of the shaft of any turbine, such as a gas, air, or steam turbine. In this application the apparatus is, for example, installed between the turbine stages, between a compressor and gas turbine.

Terms referred to in figures:

1      first entity
2      light source
3      beam splitte
4      turning mirror
5      optical receiver
6      turning mirror
7      turning mirror
10     reflecting surface
11     reflecting surface
12     rotating component
13     axis of component
20     analog-to-digital converter
21     computer or the like, microchip
22     temperature sensor
23     angle sensor
A      pulse from surface 10 during calibration and regular operation of component
B      pulse from surface 11 during calibration
B'     pulse from surface 11 during regular operation of component

**Claims**

1. An apparatus for a measurement of torque of a component (12) rotating about an axis (13) comprising two reflective surfaces that are arranged on the circumferential surface of the rotating component (12) with an axial distance between the two reflective surfaces (10,11), furthermore comprising a light source (2) and means to direct light (3,4,6,7) to the reflective surfaces (10,11) and to an optical receiver (5)
**characterised by** that
the two reflective surfaces (10,11) are plane, and the optical receiver (5) comprises one single optical sensing area, which is arranged to receive light reflected by both of the plane, reflective surfaces (10,11), and the apparatus furthermore comprises electronic computing means (21) for the processing of signals received by the optical receiver (5).

2. An apparatus according to claim 1
**characterised by** that
the apparatus comprises a beam splitter (3) and a turning mirror (4) or prism to direct light emitted by the light source (2) to the reflective surfaces (10,11) and the optical receiver (5).

3. An apparatus according to claim 1
**characterised by** that
the apparatus comprises a beam splitter (3) and three turning mirrors (4,6,7) to direct the light emitted by the light source (2) to the reflective surfaces and the optical receiver (5) and the beam splitter (3), and the turning mirrors (4,6,7) are arranged so that the light paths to the two reflecting surfaces (10,11) are of equal length.

4. An apparatus according to claim 2 or 3
**characterised by** that
the beam splitter (3) is arranged such that an incident light beam is divided into two light beams of equal intensity.

5. An apparatus according to one of the foregoing claims
**characterised by** that
the light source (2) and the means to direct light to the reflecting surfaces (10,11) are arranged with respect to the reflecting surfaces (10,11) such that light falls onto the reflecting surfaces (10,11) at essentially normal incidence.

6. An apparatus according to one of the foregoing claims
**characterised by** that
light beams falling onto the reflecting surfaces (10,11) follow light paths that run approximately parallel to one another.

7. An apparatus according to one of the foregoing claims
**characterised by** that
the light source (2) comprises a laser or one or more light emitting diodes.

8. An apparatus according to one of the foregoing claims
**characterised by** that
the optical receiver (5) comprises a photodiode with one single optical detecting area.

9. An apparatus according to claim 1
**characterised by** that
the apparatus comprises optical fibers that direct the light emitted by the light source (2) to the reflecting surfaces (10,11) and the optical receiver (5).

10. An apparatus according to claim 1
**characterised by** that
the light source (2), the optical receiver, the means to direct light to the reflecting surfaces (10,11), and the optical receiver (5) form a portable unit.

11. An apparatus according to one of the foregoing claims
**characterised by** that
the apparatus comprises a temperature sensor (22) that is connected to the electronic computing means (21).

12. An apparatus according to one of the foregoing claims
**characterised by** that
the two plane, reflecting surfaces (10,11) are arranged on the rotating component (12) with a rotational offset in opposite direction to the direction of rotation.

13. An apparatus according to one of the foregoing claims
**characterised by** that
the apparatus comprises an angle sensor (23) that is connected to the computing means (21).

14. An apparatus according to one of the foregoing claims
**characterised by** that
the apparatus comprises a turning device for rotating the component (12) at a selected speed.

15. Use of the apparatus according to claim 1
for the measurement of the torque of a rotating shaft of a gas, air, or steam turbine.

16. Use of the apparatus according to claim 15
**characterised by** that the apparatus is installed between turbine stages or between a compressor and a gas turbine.

17. Method of measurement of the torque of a rotating component (12) rotating at a speed ($\omega$) by means of an apparatus according to claim 1
**characterised by** that
the electronic computing means (21) determines a time delay ($\Delta T_L$) between two signals that are reflected by the two plane, reflecting surfaces (10, 11) and received by the optical receiver (5), and the electronic computing means (21) calculates the torque based on the time delay, the stiffness of the rotating component, the rotation speed ($\omega$), and an offset time delay ($\Delta T_0$).

18. Method according to claim 17
**characterised by** that
the electronic computing means (21) performs a correlation of two signals received from the two reflecting surfaces (10, 11).

19. Method according to claim 17
**characterised by** that
the stiffness of the component (12) is determined using a prior material calibration together with a measured temperature of the rotating component.

20. Method according to claim 17
**characterised by** that
the measurement is calibrated by rotating the component (12) at a selected speed different from a nominal speed and determining a time delay ($\Delta T_0$) between signals received from the two reflecting surfaces (10,11).

21. Method according to claim 17
**characterised by** that
the measurement is calibrated by rotating the component (12) at a selected speed equal to a nominal speed and determining a time delay ($\Delta T_0$) between signals received from the two reflecting surfaces (10,11).

Fig. 1

Fig. 2

Fig. 3

# EP 1 467 192 A1

| | European Patent Office | **EUROPEAN SEARCH REPORT** | Application Number EP 03 10 0993 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | GB 2 093 991 A (BRITISH HOVERCRAFT CORP LTD) 8 September 1982 (1982-09-08) * the whole document * ----- | 1-21 | G01L3/12 |
| | | | TECHNICAL FIELDS SEARCHED (Int.Cl.7) |
| | | | G01L |

The present search report has been drawn up for all claims

| Place of search | Date of completion of the search | Examiner |
|---|---|---|
| BERLIN | 12 September 2003 | Zafiropoulos, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 03 10 0993

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2003

| Patent document cited in search report | | Publication date | Patent family member(s) | Publication date |
|---|---|---|---|---|
| GB 2093991 | A | 08-09-1982 | NONE | |

EPO FORM P0459

For more details about this annex : see Official Journal of the European Patent Office, No. 12/82